# EUROPEAN PATENT SPECIFICATION

(11) **EP 1 239 600 B1**
(45) Date of publication and mention of the grant of the patent: **14.11.2007**
(21) Application number: 01810233.5
(22) Date of filing: 07.03.2001
(51) Int. Cl.: H04B 3/52

(54) **Wireless communication system using a waveguide**
Drahtloses Kommunikationssystem mit Wellenleiter
Système de communication sans fil utilisant un guide d'ondes

(43) Date of publication of application: 11.09.2002
(73) Proprietor: ABB RESEARCH LTD., 8050 Zürich (CH)
(72) Inventor: Lehmann, Josef, 79762 Waldshut-Tiengen (DE); Sabbattini, Bruno, 5430 Wettingen (CH); Deck, Bernhard, 79809 Weilheim (DE); Rudolf, Paul, CH-5234 Villigen (CH)
(74) Representative: ABB Patent Attorneys

(56) References cited:
- WO-A-94/14252
- PATENT ABSTRACTS OF JAPAN vol. 1999, no. 01, 29 January 1999 (1999-01-29) & JP 10 266629 A (SHIMIZU CORP), 6 October 1998 (1998-10-06)
- SCHETT G; ET AL: "Die intelligente GIS - grundlegender Wandel in der Kombination von Primär- und Sekundärtechnik" ABB REVIEW, vol. 08/1996, 1996, pages 4-14,

## Description

### Field of the Invention

The invention relates to the field of substation automation, control and monitoring. It relates to a substation with a communication device for transmitting signals between a control unit of the substation and a control unit of a bay of said substation and it further relates to a method for transmitting a signal between a control unit of a substation and control units of bay elements of said substation.

### Background of the Invention

The main function of an electrical substation Is to transfer and transform electrical power. A typical substation comprises a control unit and one or several bays consisting of one or several bay elements.

The substation control unit usually comprises a control room from where a person can monitor and control the substation.

The bays usually comprise bay elements such as disconnectors, circuit breakers, transformers etc. These bay elements are called primary appliances. On a single bay several different or similar primary appliances can be installed. Such primary appliances are connected to a control unit, which regulates, controls and monitors the primary appliances.

For controlling and monitoring purposes, the control units of the bay elements have signal network connections between each other and to the substation control unit, via which e.g. signals from the control units and real-time data of the primary appliances are transmitted. Control units also may have communications interfaces to which a service computer can be connected and via which service-relevant status data and measurement data are transmitted. The communications interfaces are used to allow a service computer to be connected to the controller in the event of a fault or during maintenance of the primary appliances. Data stored in the controller can then be read out by means of the service computer in order, for example, to determine the cause of a fault, or in order to analyze a state of the primary appliances.

High currents and voltages cause interference and electromagnetic noise in the vicinity of the substation. The low level signal connections between the control units need special attention regarding electromagnetic shielding against said noise.

Fiber optics are secure in terms of interference and therefore often used for communication purposes within substation. Besides their resistance against electromagnetic interference fiber optics have the advantage of being electrical nonconductive. There is therefore no direct electric connection between two devices connected by fiber optics. The disadvantage of fiber optic signal connections is their complicated handling and the fact that a party line (bus) is hard to implement with fiber optics only. This means that for every bay of a substation or even for each bay element with its own control unit a dedicated fiber is needed, leading to an immense bay wiring effort.

The invention relates to such a substation and substation communication system, as described above and as is disclosed in the article by G. Schett et al., "Die intelligente GIS - grundlegender Wandel in der Kombination von Primär- und Sekundärtechnik", ABB Technik, Ausgabe 8/1996, S.4-14. The data lines needed for the control and communication technology are made of conductive wires and/or of fiber-optic connections. For redundancy purposes doubled data lines can be provided.

Wireless Local Area Networks (WLAN) as e.g. described by the IEEE 802.11 standard use e.g. electromagnetic radio frequency waves, to communicate information from one point to another without relying on any physical connection. Radio frequency waves are often referred to as radio carriers because they simply perform the function of delivering energy to a remote receiver. The data being transmitted is superimposed on the radio carrier so that it can be accurately extracted at the receiving end. This is generally referred to as modulation of the carrier by the information being transmitted. Once data is modulated onto the radio carrier, the radio signal occupies more than a single frequency, since the frequency or bit rate of the modulating information adds to the carrier.

In a typical WLAN configuration, a transmitter/ receiver (transceiver) device, called an access point, connects to a server or a wired network. At a minimum the access point receives, buffers, and transmits data between the WLAN and the server or the wired network infrastructure. Other components access the WLAN through WLAN-adapters. These adapters provide an interface between the components operating system and the airwaves via an antenna.

Signal connections and networks via radio frequency system give a maximum of flexibility and reduce the costs for wiring. State of the art radio frequency systems like Bluetooth, Wireless LAN or DECT allow short-range, point-to-multipoint data transfer. Their nominal link ranges are from 10 cm to 10 meters, but can be extended to 100 meters by increasing the transmit power.

But common radio frequency systems still have a rather low reliability caused by general-purpose interference. Manufactures of such systems try to increase the system availability and reliability by using intelligent modulation and coding systems (e.g. FHSS (Frequency Hopping Spread Spectrum) or DSSS (Direct Sequence Spread Spectrum)).

Nevertheless, transmission of critical signals in the presence of severe interference, as it can appear in a substation, via radio frequency systems is still not generally accepted.

In the WO 94/14252 a communication system is described, in which the transmission of electromagnetic waves in the interior of buildings is shielded against in-building radio interference. For this purpose several rectangular waveguide segments are connected together to form an enclosed transmission medium. A plurality of transceiver devices are coupled to the transmission medium for in-coupling and out-coupling of radio waves. The waveguide segments are integrated into modular fumishing, such as partitioning walls, desks, tables and cabinets.

In the JP 10266629 radiocommunication with the same frequency is practiced inside a building by partitioning the building into rooms that are shielded electromagnetically. Several such rooms are connected together by means of a waveguide to form a zone.

### Summary of the invention

One object of the invention is therefore to provide a substation with an improved and simplified communication device for transmitting signals between control units of the substation and to provide an improved and simplified method for transmitting a signal between control units of a substation.

This object is achieved by a communication device, together with a method having the features of patent claims 1 and 17, respectively.

In one embodiment, the present invention is a substation with a communication device comprising a first transceiver with an antenna for sending/ receiving radio frequency signals connected to the substation control unit, second transceivers with antennas for sending/receiving radio frequency waves connected to the bay element control units and a waveguide for transmitting said radio frequency waves enclosing the antennas of said first and second transceivers. The waveguide shields said radio frequency waves from interference in the vicinity of the substation, and also shields, or at least attenuates, the environment from electromagnetic emissions caused by the sender. This allows to even increase transmission power beyond levels that are normally used for non guided applications, or to use frequencies out of normal bands and therefore an increased bandwith can be used.

Since several bays or bay elements are usually physically side by side their control units can easily be connected by one waveguide enclosing the several antennas. With very little effort a wireless party line (bus) can be realised. Also, additional bays or bay elements can be added to the party line by simply extending the waveguide. No extra wiring is needed. The wave guide can be an integral part of a bay or of a bay element, so the party line can be extended, by just placing the bay or the bay element in the right place.

Best shielding against interferece is achieved with a tubular wave guide with a rectangular profile. On one side of the rectangular profile the wave guide has an opening through which the antennas are stuck into the interior of the wave guide. On both sides of the opening radiation protections are designed to improve shielding and reduce radiation. The radiation protections are preferably longer than the lengths of the opening in order to minimise radiation.

In another embodiment, the present invention is a method to transmit the signals between the control unit of the substation and the control units of a bay or of a bay element. Said signal is first frequency modulated in the first transceiving device, is sent into the wave guide as a radio frequency wave, and is then received by the second transceiving device, in which the control signal is converted back into an electrical signal, which is then finally processed by said bay control unit.

### Brief description of the Drawing

Details and advantages of the present invention will become more fully apparent from the following description, the claims and the accompanying drawing in which
- Fig. 1: shows a part of a substation with switchgear bay elements and a communication device with transceiver devices according to the invention, and
- Figs. 2 a/ b: show an enlarged view of two transceiver devices according to Fig. 1.

### Description of preferred embodiments

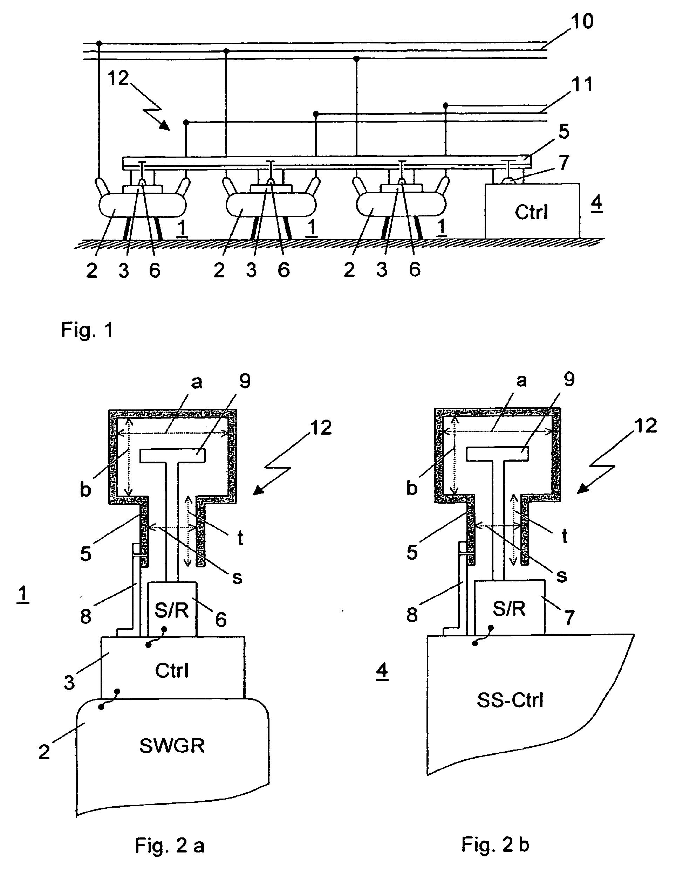

Fig. 1 shows a possible embodiment of a part of a substation with three bay elements 1 that are located on a bay and a substation control unit 4. The switchgear devices 2 are connected to the three phases of a primary transmission line 10 and a secondary transmission line 11. Instead of switchgear devices, other so called primary appliances like transformers could be installed on the bays. The primary appliances need not to be the same on all the bays and the number of bays or bay elements is in no way limited to three or less.

Each of the bay elements 1 has a control unit 3 to control and monitor the primary appliances. The bay element control units usually comprise a processor unit, a memory for storage of monitoring data and some kind of an interface, e.g. for maintenance purposes, and/or a protection relay

The substation control unit 4 comprises a computer-based server (and/or protection relay), which is network connected to the bay element control units 3 in order to exchange data and control signals. Connected to the server of the substation control unit as shown in Fig 2 b is a transceiving device 7, which serves as the access point of a wireless network. Attached to the access point is an antenna 9 for sending electromagnetic radio waves with superimposed data signals.

The bay element control unit 3 is connected to an other transceiving device 6 with an antenna 9 as shown in Fig. 2 a for sending and receiving control and real-time monitoring data signals. This transceiving device 6 is a wireless network adapter that serves as an interface between the airwaves and the bay element control units processor unit.

In order to shield the transmitted signals against interference 12 a waveguide 5 is connecting the antennas 9 of the transceiving devices 6 and 7 The waveguide has basically a tubular shape with a rectangular profile. On one side the waveguide 5 has an opening through which the antennas of the transceiving devices 6 and 7 are stuck into On both sides of the opening radiation protections are arranged. The length t of the radiation protections is longer than the length s of the opening in order to keep the radiation on a negligible low level.

The waveguide 5 is mounted onto the control units with holders 8 as shown in Figs 2 a and 2 b

In most cases the waveguide connects bay element control units that are physically side by side. Even if the control units are not 100 per cent in line or there is some displacement between the dedicated devices it is possible to communicate in a reliable way. The wave guide needs to have no complicated design and is very easy to install.

Any electromagnetic shielding material can be chosen for the wave guide, eg aluminum or copper.

Reliable waveguides for a broad band of frequencies can be designed.

Typical values of such a waveguide are

| | | |
|---|---|---|
| width a of waveguide | = | 0.1 m |
| height b of waveguide | = | 0 05 m |
| length s of opening | = | 0.03 m |
| Frequency | = | 2-3 GHz |
| Attenuation | = | 14 dB/km |
| Coupling Attenuation | = | 4-6 dB |
| Material | = | Aluminum Profile |

The waveguide 5 not only keeps interference out but it also makes sure the radio wave does not or only to a very limited extend propagate outside the waveguide. Therefore basically all frequencies that physically make sense can be used for this kind of communication, particularly others than the very narrow unlicensed 24 GHz frequency band which is used for state of the art WLAN systems. By using two or more different frequencies very high data rates can be achieved without having to somehow split a frequency in one way or another.

One possible setup could e.g. comprise transmission of real time data at 2 GHz, synchronisation impulses at 2.5 GHz and the normal monitoring data at 2.4 GHz.

By using more than just one frequency at the same time a very good real time synchronization is achieved along with a high redundancy.

The communication device according to the invention is simple to extend to additional bays or bay elements without any inter bay wiring.

Thanks to the state of the art wireless network protocols high bandwidth communication party lines (buses) can easily be implemented.

Any state of the art or upcoming commercial wireless standard technology can be used in the communication device according to this invention.

While in Highvoltage-Substations communication between bay element control units of different elements of a bay (intra-bay) is necessary, in Middlevoltage-Stibstation this communication can be reduced to bay-to-bay (inter-bay) communication between bay control units and the substation control unit

### List of Reference Signs

- 1: Switchgear bay element
- 2: Switchgear
- 3: bay element control unit
- 4: substation control unit
- 5: wave guide
- 6: transceiver, WLAN-adapter
- 7: transceiver, WLAN access point
- 8: mounting device, holder
- 9: antenna
- 10, 11: power lines
- 12: electromagnetic noise, interference
- a, b, s, t: Dimensions

## Claims

1. Medium- or high-voltage Substation, comprising:
- at least one bay element (1) with at least one primary appliance (2) and a bay element control unit (3),
- a substation control unit (4), and
- a communication device,
said communication device comprising
- a first transceiving device (7) connected to the substation control unit (4),
- a second transceiving device (6) connected to the bay element control unit (3), and
- signal transmission means (5) connecting said first and second transceiving devices,
**characterized in that**
- said first (7) and said second (6) transceiving devices are radio frequency modulating/demodulating devices (7, 6) for modulating an electrical signal onto/demodulating an electrical signal from a radio frequency wave,
- said first (7) and said second (6) transceiving devices comprise antennas (9) for transmitting and/ or receiving radio frequency waves,
- said signal transmission means comprise a waveguide (5) device for transmitting said radio frequency waves, and said waveguide device (5) encloses said antennas (9) of said first and second transceiving devices (7, 6) such that the waveguide (5) shields said radio frequency waves from interference in the vicinity of the substation and also shields the environment from electromagnetic emissions caused by the transceiving devices (7, 6).

2. The substation as claimed In Claim 1, **characterized in that**
- said substation comprises at least two bay elements (1) with a control unit (3) and a second transceiving device (6) with an antenna (9), and that
the antennas (9) of said one frist transceiving device (7) and the antennas (9) of said at least two second transceiving devices (6) are enclosed by said one waveguide (5).

3. The substation as claimed in any of the preceding Claims, **characterized in that**
- the transmission power is increased beyond the levels that are normally used for non-guided applications, or
- radio frequencies out of normal bands can be used.

4. The substation as claimed in any of the preceding Claims, **characterized in that**
- said waveguide (5) has a basically tubular shape with a rectangular profile and
- on one side the waveguide (5) has an opening through which the antennas (9) of the transceiving devices (7, 6) are stuck into the interior of the rectangular part of said waveguide (5).

5. The substation as claimed in Claim 4, **characterized in that**
- said waveguide (5) has two first opposite sides and two second opposite sides, and
- one of said first opposite sides has the opening with two opposite protruding radiation protections, said radiation protections being parallel to said two second opposite sides.

6. The substation as claimed in Claim 5. **characterized in that**
- the length (t) of said radiation protections is longer than the length (s) of said opening.

7. The substation as claimed in any of the preceding Claims, **characterized in that**
- the waveguide (5) has a width of 0.1 m, a height of 0.05 m. an opening width of 0.03 m and is made of Aluminum, and
- a frequency between 2 GHz and 3 GHz is used.

8. The substation as claimed in any of the preceding Claims, **characterized in that**
- two or more different frequencies are used in order to achieve very high data rates, and
- in particular that transmission of real time data is performed at 2 GHz, synchronization impulses are transmitted at 2.5 GHz and monitoring data are transmitted at 2.4 GHz.

9. The substation as claimed in any of the preceding Claims, **characterized in that**
- wireless network protocols are used to implement a high bandwidth communication bus, or
- commercial wireless standard technology is used.

10. The substation as claimed in any of the preceding Claims, **characterized in that**
- several bays or bay elements (1) are arranged physically side by side, and their control units (4) are connected by one waveguide (5) enclosing the antennas (9) in order to realize a wireless bus and
- in particular that additional bays or bay elements (1) can be added to the bus by extending the waveguide (5).

11. The substation as claimed in Claim 10, **characterized in that**
- the waveguide (5) is an integral part of a bay or of a bay element (1) such that the bus can be extended by just placing the bay or the bay element (1) in the right place.

12. The substation as claimed In any of the preceding Claims, **characterized in that**
- the waveguide (5) is mounted onto the control units (3, 4) with holders (8).

13. The substation as claimed in any of the preceding Claims, **characterized in that**
- said waveguide (5) is made of electromagnetic shielding material, in particular of aluminum or copper.

14. The substation as claimed in any of the preceding Claims, **characterized in that**
- the bay element control unit (3) comprises a processor unit, a memory for storage of monitoring data and an interface, in particular for maintenance, and/or a protection relay, and
- the substation control unit (4) comprises a computer-based server and/or protection relay, which is network-connected to the bay element control units (3) in order to exchange data and control signals.

15. The substation as claimed in any of the preceding Claims, **characterized in that**
- the first transceiving device (7) is connected to the server of the substation control unit (4) and serves as the access point of the wireless network, and attached to the access point is an antenna (9) for sending electromagnetic radio waves with superimposed data signals, and
- the bay element control unit (3) is connected to the second transceiving device (6) with an antenna (9) for sending and receiving control and mal-time monitoring data signals, this second transceiving device (6) being a wireless network adapter that serves as an interface between the airwaves and the processor unit of the bay element control unit (3).

16. The substation as claimed in any of the preceding Claims, **characterized in that**
- the substation is a high-voltage substation and an intra-bay communication is effected between bay element control units (3) of different bay elements (1) or
- the substation is a medium-voltage substation and an inter-bay communication is effected between bay element control units (3) and the substation control unit (4).

17. A method for transmitting a signal between a first and a second control unit (3,4), said control units (3, 4) being the control unit of a substation (4) and/or the control units (3) of bay elements (1) of the substation, **characterized in that** signal transmission means (5) are used that comprise a waveguide (5) device for transmitting radio frequency waves, and said waveguide device (5) encloses antennas (9) of first and second transceiving devices (7, 6) such that the waveguide (5) shields said radio frequency waves from interference in the vicinity of the substation and also shields the environment from electromagnetic emissions caused by the transceiving devices (7, 6), wherein
- said electrical signal is modulated in a first transceiving device (7, 6) which is connected to a first control unit (3, 4),
- said signal is then sent into the waveguide (5) as a modulated electromagnetic wave by the antenna (9) of said first transceiving device (7, 6),
- said modulated electromagnetic wave is then received by the antenna (9) of the second transceiving device (7, 6) which is connected to a second control unit (4, 3),
- said electromagnetic wave is then converted back into an electrical signal, and
- said converted electrical signal is then processed by the second control unit (4, 3).

18. The method as claimed in Claim 17, wherein
- the transmission power between the transceiving devices (7, 6) is increased beyond the levels that are normally used for non-guided applications, or
- radio frequencies out of normal bands are used.

19. The method as claimed in any of the Claims 17-18, wherein
- two or more different frequencies are used in order to achieve very high data rates, and
- in particular that transmission of real time data is performed at 2 GHz, synchronization impulses are transmitted at 2.5 GHz and monitoring data are transmitted at 2.4 GHz.

20. The method as claimed in any of the Claims 17-19, wherein
- wireless network protocols are used to implement a high bandwidth communication bus, or
- commercial wireless standard technology is used.

21. The method as claimed in any of the Claims 17-20, wherein
- several bays or bay elements (1) are arranged physically side by side, and their control units (4) are connected by one waveguide (5) enclosing the antennas (9) in order to realize a wireless bus and
- additional bays or bay elements (1) can be added to the bus by extending the waveguide (5).

22. The method as claimed in Claim 21, wherein
- the waveguide (5) is an integral part of a bay or of a bay element (1) such that the bus can be extended by just placing the bay or the bay element (1) in the right place.

## Patentansprüche

1. Mittel- oder Hochspannungs-Unterstation mit folgendem:
- mindestens einem Feldelement (1) mit mindestens einem Primärgerät (2) und einer Feldelement-Steuereinheit (3),
- eine Unterstations-Steuereinheit (4), und
- eine Kommunikationsvorrichtung,
wobei die Kommunikationsvorrichtung folgendes umfaßt
- eine mit der Unterstations-Steuereinheit (4) verbundene erste Sende-/Empfangsvorrichtung (7),
- eine mit der Feldelement-Steuereinheit (3) verbundene zweite Sende-/Empfangsvorrichtung (6), und
- die ersten und zweiten Sende-/Empfangsvorrichtungen verbindende Signalübertragungsmittel (5),
**dadurch gekennzeichnet, daß**
- die erste (7) und zweite (6) Sende-/Empfangsvorrichtung Hochfrequenz-Modulations/Demodulationsvorrichtungen (7, 6) zum Aufmodulieren eines elektrischen Signals auf/Demodulieren eines elektrischen Signals von einer Hochfrequenzwelle,
- die erste (7) und zweite (6) Sende-/Empfangsvorrichtung Antennen (9) zum Übertragen und/oder Empfangen von Hochfrequenzwellen umfaßt,
- das Signalübertragungsmittel eine Wellenleiter (5)-Vorrichtung zum Übertragen der Hochfrequenzwellen umfaßt und die Wellenleitervorrichtung (5) die Antennen (9) der ersten und zweiten Sende-/Empfangsvorrichtungen (7, 6) so umschließt, daß der Wellenleiter (5) die Hochfrequenzwellen gegen Störungen in der Nähe der Unterstation abschirmt und auch die Umgebung gegen durch die Sende-/Empfangsvorrichtungen (7, 6) verursachte elektromagnetische Abstrahlungen abschirmt.

2. Unterstation nach Anspruch 1, **dadurch gekennzeichnet, daß**
- die Unterstation mindestens zwei Feldelemente (1) mit einer Steuereinheit (3) und eine zweite Sende-/Empfangsvorrichtung (6) mit einer Antenne (9) umfaßt und daß
- die Antennen (9) der ersten Sende-/Empfangsvorrichtung (7) und die Antennen (9) der mindestens zwei zweiten Sende-/Empfangsvorrichtungen (6) durch den einen Wellenleiter (5) umschlossen sind.

3. Unterstation nach einem beliebigen der vorhergehenden Ansprüche, **dadurch gekennzeichnet, daß**
- die Sendeleistung über die Pegel hinaus erhöht wird, die normalerweise für nichtgeleitete Anwendungen benutzt werden oder
- Hochfrequenzen außerhalb normaler Bänder benutzt werden können.

4. Unterstationen nach einem beliebigen der vorhergehenden Ansprüche, **dadurch gekennzeichnet, daß**
- der Wellenleiter (5) grundlegend eine Röhrenform mit rechteckigem Profil aufweist und
- der Wellenleiter (5) an einer Seite eine Öffnung besitzt, durch die die Antennen (9) der Sende-/Empfangsvorrichtungen (7, 6) in das innere des rechteckigen Teils des Wellenleiters (5) gesteckt werden.

5. Unterstation nach Anspruch 4, **dadurch gekennzeichnet, daß**
- der Wellenleiter (5) zwei erste entgegengesetzte Seiten und zwei zweite entgegengesetzte Seiten aufweist, und
- eine der ersten entgegengesetzten Seiten die Öffnungen mit zwei entgegengesetzten vorstehenden Strahlungsschutzvorrichtungen aufweist, wobei die Strahlungsschutzvorrichtungen parallel zu den zwei zweiten entgegengesetzten Seiten sind.

6. Unterstation nach Anspruch 5, **dadurch gekennzeichnet, daß**
- die Länge (t) der Strahlungsschutzvorrichtungen länger als die Länge (s) der Öffnung ist.

7. Unterstation nach einem beliebigen der vorhergehenden Ansprüche, **dadurch gekennzeichnet, daß**
- der Wellenleiter (5) eine Breite von 0,1 m, eine Höhe von 0,05 m, eine Öffnungsbreite von 0,03 m aufweist und aus Aluminium besteht, und
- eine Frequenz zwischen 2 GHz und 3 GHz benutzt wird.

8. Unterstation nach einem beliebigen der vorhergehenden Ansprüche, **dadurch gekennzeichnet, daß**
- zwei oder mehr unterschiedliche Frequenzen benutzt werden, um sehr hohe Datenraten zu erreichen, und
- daß insbesondere die Übertragung von Echtzeitdaten mit 2 GHz durchgeführt wird, Synchronimpulse mit 2,5 GHz übertragen werden und Überwachungsdaten mit 2,4 GHz übertragen werden.

9. Unterstation nach einem beliebigen der vorhergehenden Ansprüche, **dadurch gekennzeichnet, daß**
- Protokolle des drahtlosen Netzes zum Implementieren eines Kommunikationsbusses mit hoher Bandbreite benutzt werden, oder
- kommerzielle Technik des drahtlosen Standards benutzt wird.

10. Unterstation nach einem beliebigen der vorhergehenden Ansprüche, **dadurch gekennzeichnet, daß**
- mehrere Felder oder Feldelemente (1) physikalisch nebeneinander angeordnet sind und ihre Steuereinheiten (4) durch einen Wellenleiter (5) verbunden sind, der die Antennen (9) einschließt, um einen drahtlosen Bus zu realisieren, und
- daß insbesondere zusätzliche Felder oder Feldelemente (1) durch Verlängern des Wellenleiters (5) zum Bus hinzugefügt werden können.

11. Unterstation nach Anspruch 10, **dadurch gekennzeichnet, daß**
- der Wellenleiter (5) ein integraler Teil eines Feldes oder eines Feldelements (1) ist, so daß der Bus verlängert werden kann, indem das Feld oder das Feldelement (1) einfach an die richtige Stelle gesetzt wird.

12. Unterstation nach einem beliebigen der vorhergehenden Ansprüche, **dadurch gekennzeichnet, daß**
- der Wellenleiter (5) mit Haltern (8) an den Steuereinheiten (3, 4) befestigt ist.

13. Unterstation nach einem beliebigen der vorhergehenden Ansprüche, **dadurch gekennzeichnet, daß**
- der Wellenleiter (5) aus elektromagnetischem Abschirmmaterial besteht, insbesondere aus Aluminium oder Kupfer.

14. Unterstation nach einem beliebigen der vorhergehenden Ansprüche, **dadurch gekennzeichnet, daß**
- die Feldelement-Steuereinheit (3) eine Prozessoreinheit, einen Speicher zur Speicherung von Überwachungsdaten und eine Schnittstelle, insbesondere für Wartung, und/oder ein Schutzrelais umfaßt und
- die Unterstations-Steuereinheit (4) einen rechnerbasierenden Server und/oder ein Schutzrelais umfaßt, das mit den Feldelement-Steuereinheiten (3) im Netz verbunden ist, um Daten und Steuersignale auszutauschen.

15. Unterstation nach einem beliebigen der vorhergehenden Ansprüche, **dadurch gekennzeichnet, daß**
- die erste Sende-/Empfangsvorrichtung (7) mit dem Server der Unterstations-Steuereinheit (4) verbunden ist, und als Zugangspunkt des drahtlosen Netzes dient, und an den Zugangspunkt einer Antenne (9) zum Senden von elektromagnetischen Funkwellen mit überlagerten Datensignalen angeschlossen ist, und
- die Feldelement-Steuereinheit (3) mit der zweiten Sende-/Empfangsvorrichtung (6) mit einer Antenne (9) zum Senden und Empfangen von Steuerungs- und Echtzeitüberwachungssignalen verbunden ist, wobei diese zweite Sende-/Empfangsvorrichtung (6) ein drahtloser Netzadapter ist, der als Schnittstelle zwischen den Funkwellen und der Prozessoreinheit der Feldelement-Steuereinheit (3) dient.

16. Unterstation nach einem beliebigen der vorhergehenden Ansprüche, **dadurch gekennzeichnet, daß**
- die Unterstation eine Hochspannungs-Unterstation ist und eine feldinterne Kommunikation zwischen Feldelement-Steuereinheiten (3) unterschiedlicher Feldelemente (1) bewirkt wird, oder
- die Unterstation eine Mittelspannungs-Unterstation ist und eine Kommunikation zwischen Feldelement-Steuereinheiten (3) und der Unterstations-Steuereinheiten (4) bewirkt wird.

17. Verfahren zum Übertragen eines Signals zwischen einer ersten und einer zweiten Steuereinheit (3, 4), wobei die Steuereinheiten (3, 4) die Steuereinheit einer Unterstation (4) und/oder die Steuereinheiten (3) von Feldelementen (1) der Unterstation sind, **dadurch gekennzeichnet, daß** Signalübertragungsmittel (5) benutzt werden, die eine Wellenleiter (5)-Vorrichtung zum Übertragen von Hochfrequenzwellen benutzen, und die Wellenleitervorrichtung (5) Antennen (9) der ersten und zweiten Sende-/Empfangsvorrichtung (7, 6) einschließt, so daß der Wellenleiter (5) Hochfrequenzwellen gegen Störungen in der Nähe der Unterstation abschirmt und auch die Umgebung gegen durch die Sende-/Empfangsvorrichtungen (7, 6) verursachten elektromagnetischen Abstrahlungen abschirmt, wobei
- das elektrische Signal in einer ersten Sende-/Empfangsvorrichtung (7, 6) moduliert wird, die mit einer ersten Steuereinheit (3, 4) verbunden ist,
- das Signal dann als modulierte elektromagnetische Welle von der Antenne (9) der ersten Sende-/Empfangsvorrichtung (7, 6) in den Wellenleiter (5) gesendet wird,
- die modulierte elektromagnetische Welle dann von der Antenne (9) der zweiten Sende-/Empfangsvorrichtung (7, 6) empfangen wird, die mit einer zweiten Steuereinheit (4, 3) verbunden ist.
- die elektromagnetische Welle dann wieder in ein elektrisches Signal umgewandelt wird, und
- das umgewandelte elektrische Signal dann von der zweiten Steuereinheit (4, 3) verarbeitet wird.

18. Verfahren nach Anspruch 17, wobei
- die Sendeleistung zwischen den Sende-/Empfangsvorrichtungen (7, 6) über die Pegel hinaus erhöht wird, die normalerweise für nichtgeleitete Anwendungen benutzt werden, oder
- Hochfrequenzen außerhalb normaler Bänder benutzt werden.

19. Verfahren nach einem beliebigen der Ansprüche 17-18, wobei
- zwei oder mehr unterschiedliche Frequenzen benutzt werden, um sehr hohe Datenraten zu erreichen, und
- insbesondere die Übertragung von Echtzeitdaten mit 2 GHz durchgeführt wird, Synchronimpulse mit 2,5 GHz übertragen werden und Überwachungsdaten mit 2,4 GHz übertragen werden.

20. Verfahren nach einem beliebigen der Ansprüche 17-19, wobei
- Protokolle drahtloser Netze zum Implementieren eines Kommunikationsbusses mit hoher Bandbreite benutzt werden, oder
- kommerzielle Technik des drahtlosen Standards benutzt wird.

21. Verfahren nach einem beliebigen der Ansprüche 17-20, wobei
- mehrere Felder oder Feldelemente (1) physikalisch nebeneinander angeordnet sind und ihre Steuereinheiten (4) durch einen die Antennen (9) umschließenden Wellenleiter (5) verbunden sind, um einen drahtlosen Bus zu realisieren, und
- zusätzliche Felder oder Feldelemente (1) durch Verlängern des Wellenleiters (5) zum Bus hinzugefügt werden können.

22. Verfahren nach Anspruch 21, wobei
- der Wellenleiter (5) ein integraler Teil eines Feldes oder eines Feldelements (1) ist, so daß der Bus verlängert werden kann, indem das Feld oder das Feldelement (1) einfach an die richtige Stelle gesetzt wird.

## Revendications

1. Poste électrique à moyenne tension ou haute tension, comprenant :
- au moins un élément de baie (1) avec au moins un appareil primaire (2) et une unité de commande d'élément de baie (3),
- une unité de commande de poste électrique (4), et
- un dispositif de communication,
ledit dispositif de communication comprenant
- un premier dispositif d'émission-réception (7) connecté à l'unité de commande de poste électrique (4),
- un second dispositif d'émission-réception (6) connecté à l'unité de commande d'élément de baie (3), et
- des moyens de transmission de signaux (5) connectant lesdits premier et second dispositifs d'émission-réception,
**caractérisé en ce que**
- ledit premier (7) et ledit second (6) dispositifs d'émission-réception sont des dispositifs de modulation/démodulation de fréquence radio (7, 6) pour moduler un signal électrique dans/démoduler un signal électrique à partir d'une onde de fréquence radio,
- ledit premier (7) et ledit second (6) dispositifs d'émission-réception comprennent des antennes (9) pour transmettre et/ou recevoir des ondes de fréquences radio,
- lesdits moyens de transmission de signaux comprennent un dispositif de guide d'onde (5) pour transmettre lesdites ondes de fréquences radio, et ledit dispositif de guide d'onde (5) enferme lesdites antennes (9) desdits premier et second dispositifs d'émission-réception (7, 6) de telle sorte que le guide d'onde (5) protège lesdites ondes de fréquences radio contre une interférence dans le voisinage du poste électrique et protège également l'environnement contre des émissions électromagnétiques provoquées par les dispositifs d'émission-réception (7, 6).

2. Poste électrique selon la revendication 1,
**caractérisé en ce que**
- ledit poste électrique comprend au moins deux éléments de baie (1) avec une unité de commande (3) et un second dispositif d'émission-réception (6) avec une antenne (9), et que
- les antennes (9) dudit premier dispositif d'émission-réception (7) et les antennes (9) desdits au moins deux seconds dispositifs d'émission-réception (6) sont enfermées par ledit un guide d'onde (5).

3. Poste électrique selon l'une quelconque des revendications précédentes, **caractérisé en ce que**
- la puissance d'émission est augmentée au-delà des niveaux qui sont normalement utilisés pour des applications non guidées, et
- des fréquences radio en dehors des bandes normales peuvent être utilisées.

4. Poste électrique selon l'une quelconque des revendications précédentes, **caractérisé en ce que**
- ledit guide d'onde (5) a une forme essentiellement tubulaire avec un profil rectangulaire et
- sur un côté, le guide d'onde (5) a une ouverture à travers laquelle les antennes (9) des dispositifs d'émission-réception (7, 6) sont coincées dans l'intérieur de la partie rectangulaire dudit guide d'onde (5).

5. Poste électrique selon la revendication 4,
**caractérisé en ce que**
- ledit guide d'onde (5) a deux premiers côtés opposés et deux seconds côtés opposés, et
- un desdits premiers côtés opposés a l'ouverture avec deux protections contre le rayonnement, saillantes opposées, lesdites protections contre le rayonnement étant parallèles auxdits deux seconds côtés opposés.

6. Poste électrique selon la revendication 5,
**caractérisé en ce que**
- la longueur (t) desdites protections contre le rayonnement est supérieure à la longueur (s) de ladite ouverture.

7. Poste électrique selon l'une quelconque des revendications précédentes, **caractérisé en ce que**
- le guide d'onde (5) a une largeur de 0,1 m, une hauteur de 0,05 m, une largeur d'ouverture de 0,03 m et est fait d'aluminium, et
- une fréquence entre 2 GHz et 3 GHz est utilisée.

8. Poste électrique selon l'une quelconque des revendications précédentes, **caractérisé en ce que**
- deux fréquences différentes ou plus sont utilisées pour obtenir des débits de données très élevés, et
- en particulier qu'une transmission de données en temps réel est réalisée à 2 GHz, des impulsions de synchronisation sont transmises à 2,5 GHz et des données de surveillance sont transmises à 2,4 GHz.

9. Poste électrique selon l'une quelconque des revendications précédentes, **caractérisé en ce que**
- des protocoles de réseau sans fil sont utilisés pour mettre en oeuvre un bus de communication à bande passante élevée, ou
- une technologie standard commerciale sans fil est utilisée.

10. Poste électrique selon l'une quelconque des revendications précédentes, **caractérisé en ce que**
- plusieurs baies ou éléments de baie (1) sont agencé(e)s physiquement côte à côte, et leurs unités de commande (4) sont connectées par un guide d'onde (5) enfermant les antennes (9) pour réaliser un bus sans fil et
- en particulier que des baies ou des éléments de baie (1) peuvent être ajouté(e)s au bus par l'extension du guide d'onde (5).

11. Poste électrique selon la revendication 10,
**caractérisé en ce que**
- le guide d'onde (5) fait partie intégrante d'une baie ou d'un élément de baie (1) de telle sorte que le bus peut être étendu en plaçant juste la baie ou l'élément de baie (1) dans le bon endroit.

12. Poste électrique selon l'une quelconque des revendications précédentes, **caractérisé en ce que**
- le guide d'onde (5) est monté sur les unités de commande (3, 4) avec des supports (8).

13. Poste électrique selon l'une quelconque des revendications précédentes, **caractérisé en ce que**
- ledit guide d'onde (5) est fait d'un matériau de protection électromagnétique, en particulier d'aluminium ou de cuivre.

14. Poste électrique selon l'une quelconque des revendications précédentes, **caractérisé en ce que**
- l'unité de commande d'élément de baie (3) comprend une unité de processeur, une mémoire pour le stockage des données de surveillance et une interface, en particulier pour la maintenance, et/ou un relais de protection, et
- l'unité de commande de poste électrique (4) comprend un serveur informatique et/ou un relais de protection, qui est connecté par réseau aux unités de commande d'éléments de baie (3) pour échanger des signaux de données et de commande.

15. Poste électrique selon l'une quelconque des revendications précédentes, **caractérisé en ce que**
- le premier dispositif d'émission-réception (7) est connecté au serveur de l'unité de commande de poste électrique (4) et fait office de point d'accès au réseau sans fil, et il est rattaché au point d'accès une antenne (9) pour envoyer des ondes radio électromagnétiques avec des signaux de données superposés, et
- l'unité de commande d'élément de baie (3) est connectée au second dispositif d'émission-réception (6) avec une antenne (9) pour envoyer et recevoir des signaux de données de surveillance en temps réel et de commande, ce second dispositif d'émission-réception (6) étant un adaptateur de réseau sans fil qui fait office d'interface entre les ondes aériennes et l'unité de processeur de l'unité de commande d'élément de baie (3).

16. Poste électrique selon l'une quelconque des revendications précédentes, **caractérisé en ce que**
- le poste électrique est un poste électrique à haute tension et une communication intra-baie est effectuée entre des unités de commande d'éléments de baie (3) de différents éléments de baie (1) ou
- le poste électrique est un poste électrique à moyenne tension et une communication inter-baie est effectuée entre des unités de commande d'éléments de baie (3) et l'unité de commande de poste électrique (4).

17. Procédé de transmission d'un signal entre une première et une seconde unités de commande (3, 4), lesdites unités de commande (3,4) étant l'unité de commande d'un poste électrique (4) et/ou les unités de commande (3) d'éléments de baie (1) du poste électrique, **caractérisé en ce que** des moyens de transmission de signaux (5) sont utilisés qui comprennent un dispositif de guide d'onde (5) pour transmettre des ondes de fréquences radio, et ledit dispositif de guide d'onde (5) enferme des antennes (9) des premier et second dispositifs d'émission-réception (7, 6) de telle sorte que le guide d'onde (5) protège lesdites ondes de fréquences radio contre une interférence dans le voisinage du poste électrique et protège également l'environnement contre des émissions électromagnétiques provoquées par les dispositifs d'émission-réception (7, 6), dans lequel
- ledit signal électrique est modulé dans un premier dispositif d'émission-réception (7, 6) qui est connecté à une première unité de commande (3, 4),
- ledit signal est ensuite envoyé dans le guide d'onde (5) comme une onde électromagnétique modulée par l'antenne (9) dudit premier dispositif d'émission-réception (7, 6),
- ladite onde électromagnétique modulée est ensuite reçue par l'antenne (9) du second dispositif d'émission-réception (7, 6) qui est connecté à une seconde unité de commande (4, 3),
- ladite onde électromagnétique est ensuite reconvertie en un signal électrique, et
- ledit signal électrique converti est ensuite traité par la seconde unité de commande (4, 3).

18. Procédé selon la revendication de 17, dans lequel
- la puissance d'émission entre les dispositifs d'émission-réception (7,6) est augmentée au-delà des niveaux qui sont normalement utilisés pour des applications non guidées, ou
- des fréquences radio en dehors des bandes normales sont utilisées.

19. Procédé selon l'une quelconque des revendications 17 à 18, dans lequel
- deux fréquences différentes ou plus sont utilisées pour obtenir des débits de données très élevés, et
- en particulier qu'une transmission de données en temps réel est réalisée à 2 GHz, des impulsions de synchronisation sont transmises à 2,5 GHz et des données de surveillance sont transmises à 2,4 GHz.

20. Procédé selon l'une quelconque des revendications 17 à 19, dans lequel
- des protocoles de réseau sans fil sont utilisés pour mettre en oeuvre un bus de communication à bande passante élevée, ou
- une technologie standard commerciale sans fil est utilisée.

21. Procédé selon l'une quelconque des revendications 17 à 20, dans lequel
- plusieurs baies ou éléments de baie (1) sont agencé(e)s physiquement côte à côte, et leurs unités de commande (4) sont connectées par un guide d'onde (5) enfermant les antennes (9) pour réaliser un bus sans fil et
- des baies additionnelles ou des éléments de baie additionnels (1) peuvent être ajouté(e)s au bus par l'extension du guide d'onde (5).

22. Procédé selon la revendication 21, dans lequel
- le guide d'onde (5) fait partie intégrante d'une baie ou un élément de baie (1) de telle sorte que le bus peut être étendu en plaçant juste la baie ou l'élément de baie (1) dans le bon endroit.
